(19) Europäisches Patentamt
European Patent Office
Office européen des brevets

(11) **EP 2 478 346 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **10752823.4**

(22) Anmeldetag: **14.09.2010**

(51) Int Cl.:
**G01M 17/10** (2006.01)    G07C 5/08 (2006.01)

(86) Internationale Anmeldenummer:
**PCT/EP2010/063488**

(87) Internationale Veröffentlichungsnummer:
**WO 2011/032948 (24.03.2011 Gazette 2011/12)**

(54) **VERFAHREN UND VORRICHTUNG ZUR ÜBERWACHUNG DES FAHRVERHALTENS EINES SCHIENENFAHRZEUGS**

METHOD AND DEVICE FOR MONITORING THE DRIVING BEHAVIOR OF A RAILWAY VEHICLE

PROCÉDÉ ET DISPOSITIF POUR LA SURVEILLANCE DU COMPORTEMENT EN DÉPLACEMENT D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.09.2009 DE 102009041823**

(43) Veröffentlichungstag der Anmeldung:
**25.07.2012 Patentblatt 2012/30**

(73) Patentinhaber: **KNORR-BREMSE Systeme für Schienenfahrzeuge GmbH 80809 München (DE)**

(72) Erfinder:
• **GÜNTHER, Frank 80993 München (DE)**
• **WACH, Jörg-Johannes 81247 München (DE)**
• **FRIESEN, Ulf 85579 Neubiberg (DE)**
• **SEDLMAIR, Stefan 82284 Grafrath (DE)**

(74) Vertreter: **Mattusch, Gundula Knorr-Bremse Systeme für Schienenfahrzeuge GmbH Patentabteilung Moosacher Strasse 80 D-80809 München (DE)**

(56) Entgegenhaltungen:
EP-A1- 1 274 979        WO-A1-00/60322
WO-A1-00/76828        GB-A- 2 365 528
US-A1- 2009 001 226

EP 2 478 346 B1

## Beschreibung

Die Erfindung betrifft ein Verfahren und eine Vorrichtung zum Überwachen des Fahrverhaltens eines Schienenfahrzeugs gemäß den Oberbegriffen von Anspruch 1 und Anspruch 10.

Im Schienenfahrzeugverkehr werden heutzutage vermehrt Diagnose- und Überwachungssysteme eingesetzt, mit denen Zustandsänderungen von Bauteilen und Baugruppen des Schienenfahrzeugs erfasst werden, um Defekte dieser Bauteile und Baugruppen zu erkennen. Insbesondere bei einem Radsatz eines Schienenfahrzeuges ist eine Detektion von Schäden und Rissen im Hinblick auf die Betriebssicherheit von hohem Interesse.

Gemäß der EP 1 274 979 B1 wird das Schwingungsverhalten wenigstens einer Fahrzeugkomponente überwacht, indem wenigstens ein Schwingungssignal erfasst, einer Fourrier-Transformation unterzogen und mit wenigstens einem Referenzwert verglichen wird, wobei der einer Eigenschwingungskomponente der Fahrzeugkomponente zugeordnete Frequenzpeak bezüglich wenigstens eines Kennwerts (Frequenzkennwert, Dämpfungskennwert, Amplitudenkennwert) überwacht wird. Mit anderen Worten wird gemäß der bekannten Schrift die Fahrzeugkomponente einer Art Modalanalyse unterzogen und modale Parameter wie Eigenfrequenz und Dämpfung zum Erkennen von Schäden im Rahmen einer Onboard-Diagnose überwacht. Das bekannte Verfahren wertet jedoch Zeitverläufe der Messsignale undifferenziert aus. Insbesondere werden bei dem Verfahren unter völlig unterschiedlichen Randbedingungen wie beispielsweise unterschiedlichen Haftreibungs- bzw. Gleitreibungsverhältnissen gewonnene Signale gemeinsam ausgewertet. Demzufolge unterliegen die Kennwerte aus der Fourrier-Transformation wie beispielsweise die Werte für die Eigenfrequenzen sowie deren Amplitudenmaxima einer relativ großen Streuung, welche eine eindeutige und zuverlässige Auswertung der Frequenzgänge erschwert. Insbesondere ist das Anregungsspektrum im Betrieb so groß, dass wegen hoher Rauschanteile des Messsignals nicht klar ist, ob überhaupt Eigenschwingungen der betreffenden Fahrzeugkomponente angeregt werden oder nicht.

Zwar sieht das bekannte Verfahren vor, dass die aus den Messungen hervor gegangenen Frequenzgänge mit fahrstreckenabhängigen Referenz-Frequenzgängen (Neubaustrecke, Altbaustrecke, Ausbaustrecke) verglichen werden, jedoch ist diese Vorgehensweise mit einigen Nachteilen verbunden. Denn zum einen müssen für alle im bestimmungsgemäßen Betrieb des Schienenfahrzeugs befahrbare Strecken berücksichtigt werden. Zum andern dürfen sich dann nicht die Eigenschaften der Fahrstrecke durch äußere Einflüsse verändern oder die Referenzdaten müssen ständig auf dem neuesten Stand gehalten werden. Dies erfordert jedoch einen unangemessen hohen Aufwand, weshalb die Voraussetzungen für eine Anwendung des bekannten Verfahrens in der Praxis wohl nicht einzuhalten sind.

Das bekannte Verfahren zur Diagnose- und Zustandsüberwachung von Schienenfahrzeugkomponenten basiert folglich auf einer kontinuierlichen und ständigen Messung und Auswertung von Messgrößen. Dabei wechseln jedoch die Randbedingungen für die Messgrößen ständig. Eine Analyse der aus den Zeitsignalen gewonnen Frequenzgänge ist sehr aufwendig, weil der Einfluss der Randbedingungen mit Hilfe von fahrstreckenabhängigen Referenzsignalen bewertet werden muss.

Ein gattungsbildendes Verfahren bzw. eine gattungsbildende Vorrichtung sind aus US 2009/0001226 A1 bekannt.

Demgegenüber besteht die Aufgabe der Erfindung darin, ein gattungsgemäßes Verfahren bzw. eine gattungsgemäße Vorrichtung derart weiter zu bilden, dass es bzw. sie eine zuverlässigere Detektion von Schäden und Defekten an einem Radsatz eines Schienenfahrzeugs ermöglicht.

Diese Aufgabe wird durch die Merkmale von Anspruch 1 bzw. von Anspruch 10 gelöst.

Offenbarung der Erfindung

Es wird ein Verfahren und eine Vorrichtung vorgeschlagen, wobei die Vorrichtung ausgebildet ist, um die folgenden Schritte des Verfahrens auszuführen:

- Identifizieren wenigstens eines signifikanten Ereignisses innerhalb des Zeitverlaufs des Messsignals, bei welchem die Messgröße einen vorgegebenen Mindestwert überschreitet sowie Identifizieren des Ereignis-Zeitpunkts, an welchem dieses signifikante Ereignis stattgefunden hat,
- Bilden des Frequenzgangs aus dem Zeitverlauf des Messsignals von dem Ereignis-Zeitpunkt an, wobei der Frequenzgang für eine definierte Zeitdauer ($t_a$) ab dem Ereignis-Zeitpunkt gebildet wird,
- Vergleichen des gebildeten Frequenzgangs mit wenigstens einem gespeicherten Referenz-Frequenzgang,
- Bewertung des Schwingungsverhaltens des Radsatzes abhängig von der Abweichung des gebildeten Frequenzgangs von dem wenigstens einen gespeicherten Referenz-Frequenzgang.

Diese Bewertung hat dann zum Ziel, anhand eines unter Umständen veränderten oder auffälligen Schwingungsverhaltens des Radsatzes Rückschlüsse auf Defekte des überwachten Radsatzes ziehen zu können.

Der Vorteil dieser Lösung liegt insbesondere darin, dass der rechnerische Aufwand vergleichsweise gering ist, da nicht kontinuierlich der gesamte Zeitverlauf eines Messsignals Fourier-transformiert und analysiert wird, sondern nur die Antwort des Systems auf signifikante Einzelereignisse. Durch vorherige Definition signifikanter Einzelereignisse werden nur die Frequenzgänge gebildet bzw. analysiert, die mit hoher Wahrscheinlichkeit einen sicheren Aufschluss über den Zustand des überwachten Radsatzes liefern und insbesondere auf eine Rissbildung am Radsatz hindeuten.

Solche signifikanten Ereignisse wie die vertikale Schwingungsanregung des Radsatzes mit hoher, d.h. einen vorgegebenen Mindestwert überschreitender Beschleunigung des Radsatzes haben zur Folge, dass der Radsatz überhaupt zu erkennbaren Eigenschwingungen angeregt wird. Bei hinreichend hoher Stoßanregung in vertikaler Richtung, beispielsweise durch grobe Schienenunebenheiten hebt der Radsatz für kurze Zeit vollständig von der Schiene ab, so dass der Einfluss der jeweils befahrenen Fahrstrecke auf das Eigenschwingverhalten als gering einzuschätzen ist. Insbesondere kann der Radsatz dann annähernd frei in seiner charakteristischen Eigenschwingung schwingen. Somit arbeitet das erfindungsgemäße Verfahren fahrwegunabhängig genau. Insbesondere kann auf eine aufwändige Erfassung und Speicherung fahrwegabhängiger Referenzdaten verzichtet werden.

Erfindungsgemäß wird als die das Schwingungsverhalten des Radsatzes des Schienenfahrzeugs charakterisierende Messgröße die Beschleunigung des Radsatzes in vertikaler Richtung herangezogen, wobei ein signifikantes Ereignis innerhalb des Zeitverlaufs der Beschleunigung dadurch identifiziert wird, dass die gemessene Beschleunigung des Radsatzes einen definierten Mindestwert überschritten hat. Dann ist davon auszugehen, dass der Radsatz den Kontakt zur Schiene kurzfristig verliert und dadurch annähernd frei schwingen kann, wodurch sich die Eigenschwingungsform ungestört, d.h. ohne den die Steifigkeit und Dämpfung des Radsatzes beeinflussenden Kontakt mit angrenzenden Strukturen ausbilden kann. Erfindungsgemäß beträgt der vorgegebene Mindestwert für die vertikale Beschleunigung wenigstens 10 g (10 m/s$^2$). Mit einem solchen vorgegebenen Mindestwert für die Vertikalbeschleunigung zur Festlegung des Ereignis-Zeitpunkts, ab welchem der Frequenzgang gebildet und analysiert bzw. mit wenigstens einem Referenz-Frequenzgang verglichen wird, kann insbesondere ein Riss bei dem Radsatz (Rad und/oder Welle) zuverlässig detektiert werden.

Der grundlegende Gedanke besteht also darin, dass Frequenzgänge und eine Frequenzanalyse nur nach signifikanten Einzelereignissen durchgeführt werden. Als signifikante Einzelereignisse werden dabei Ereignisse definiert, bei denen die von wenigstens einem Sensor aufgenommenen Zeitsignale, nämlich Beschleunigungssignale zum Ereignis-Zeitpunkt den vorgegebenen Mindestwert überschreiten.

Mit anderen Worten wird bei einem zu überwachenden Radsatz eines Schienenfahrzeuges mit Hilfe eines oder mehrerer Sensoren ein Messsignal einer das Schwingungsverhalten des Radsatzes charakterisierenden Größe zwar fortlaufend gemessen. Die Bildung des entsprechenden Frequenzgangs bzw. eine Frequenzanalyse erfolgt aber erst dann, wenn das Messsignal einen vorbestimmten Mindestwert überschritten hat. Durch die Frequenzanalyse während einer definierten Zeitdauer nach dem signifikanten Einzelereignis als zeitlichem Startpunkt und einem anschließenden Vergleich mit wenigstens einem Referenz-Frequenzgang ist ein zuverlässiger Rückschluss auf Veränderungen und Defekte am Radsatz mit nur geringem Rechneraufwand möglich.

Wenn beispielsweise die Welle eines Radsatzes einen Riss aufweist, so nimmt die dynamische Nachgiebigkeit des Radsatzes zu, was sich in einem "weicheren" System mit einer gegenüber einer unbeschädigten Welle kleineren Eigenfrequenz sowie in der Regel in einer größeren Dämpfung niederschlägt. Weiterhin wird der Frequenzpeak bei der Eigenfrequenz, d.h. die Amplitude der Eigenfrequenz im Frequenzgang größer. Diese Kennwerte der Eigenschwingungsform sind aus dem gebildeten Frequenzgang im Vergleich mit dem Referenz-Frequenzgang lesbar. Durch die Konzentration auf definierte Einzelereignisse ab einer gewissen Mindestamplitude des den jeweiligen Messwert repräsentierenden Signals wird sichergestellt, dass der Radsatz stets von vergleichbaren Randbedingungen beeinflusst wird. Der Mindestwert wird dabei so gewählt, dass eine ausreichende Anzahl von signifikanten Ereignissen erwartet werden kann. Geringe Anregungen des Radsatzes, welche ohnehin keine Eigenschwingungen anregen würden bleiben jedoch außer Betracht, so dass der Rechenaufwand bei der Auswertung der Signale gegenüber dem Stand der Technik drastisch reduziert wird.

Der so gewonnene Referenz-Frequenzgang des Radsatzes stellt damit eine Art charakteristischer "Radsatz-Fingerabdruck" dar, der für jeden Radsatz, vorzugsweise individuell ermittelt und zu Analysezwecken für den Vergleich mit Referenzdaten und der anschließenden, aus dem Vergleich hervorgehenden Auswertung bzw. Bewertung gespeichert wird.

Durch die in den Unteransprüchen aufgeführten Maßnahmen sind vorteilhafte Weiterbildungen und Verbesserungen der in Anspruch 1 und Anspruch 10 angegebenen Erfindung möglich.

Bevorzugt wird der Frequenzgang aus dem Zeitverlauf des Messsignals durch eine Fast-Fourier-Transformation (FFT) erzeugt. Hiermit lassen sich mit vertretbarem rechentechnischen Aufwand zuverlässige Ergebnisse erzielen.

Beispielsweise stellt die definierte Zeitdauer, für welche der Frequenzgang des Zeitverlaufs des Messsignals gebildet wird, ein stets festes Zeitintervall dar, beispielsweise zwischen 5 und 500 Millisekunden. Denn ein solches relativ kurzes Zeitfenster genügt, um eine aussagekräftige Fourier-Transformation durchzuführen und einen aussagekräftigen Frequenzgang zu erhalten, aus welchem die modalen Parameter wie Eigenfrequenz, Amplitude der Eigenfrequenz $\omega e$, Lersche Dämpfung De sowie dynamische Steifigkeit S ($\omega$) bzw. die dynamische Nachgiebigkeit N ($\omega$) ersichtlich

bzw. bestimmbar sind.

Alternativ beginnt die definierte Zeitdauer, für welche der Frequenzgang des Zeitverlaufs des Messsignals gebildet wird ab dem Ereignis-Zeitpunkt und endet aber, wenn eine bestimmte charakterisierende Eigenschaft der Schwingung wie ein bestimmtes Maß des Abklingens der Schwingung eintritt oder ein weiteres oder nächstes signifikantes Ereignisses auftritt. In diesem Fall ist daher die Zeitdauer zwar definiert durch Anfang und Ende, aber nicht stets gleich lang.

Der Vergleich des gebildeten Frequenzgangs mit dem wenigstens einen Referenz-Frequenzgang erfolgt bevorzugt anhand wenigstens eines modalen Parameters wie Eigenfrequenz $\omega$e, Amplitude der Eigenfrequenz $\omega$e, Lehrsche Dämpfung De oder Nachgiebigkeit N bzw. Steifigkeit S.

Bei dem Vergleich des gebildeten Frequenzgangs mit dem wenigstens einen Referenz-Frequenzgang wird bevorzugt der Einfluss des aktuellen Verschleißzustands des Radsatzes
und die aktuelle Drehzahl des Radsatzes berücksichtigt. Dadurch lässt sich mit wenig Signalverarbeitungsaufwand die Aussagegenauigkeit weiter verbessern.

Weitere, die Erfindung fortbildende Maßnahmen werden nachstehend gemeinsam mit der Beschreibung eines bevorzugten Ausführungsbeispiels der Erfindung anhand der Figuren näher dargestellt. In der Zeichnung zeigt:

Fig.1    ein schematisches Blockschaltbild einer Vorrichtung zur Überwachung des Fahrverhaltens eines Schienenfahrzeugs gemäß einer bevorzugten Ausführungsform,

Fig.2    ein Beschleunigungs-Zeit-Diagramm eines überwachten Radsatzes des Schienenfahrzeugs als Folge eines signifikanten Ereignisses;

Fig.3    ein Beschleunigungs-Frequenz-Diagramm eines Referenz-Frequenzgangs.

Beschreibung des Ausführungsbeispiels

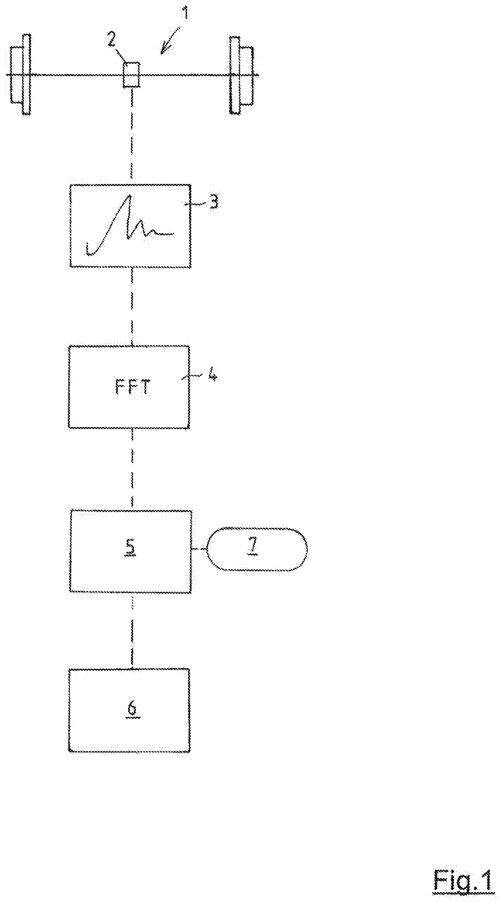

Im bestimmungsgemäßen Betrieb rollen die Radsätze eines Schienenfahrzeugs über einen Schienenfahrweg. Je nach Fahrgeschwindigkeit und Zustand des Schienenfahrwegs erfahren die Radsätze eine Schwingungsanregung. Diese Schwingungsanregung führt zu Schwingungen der Radsätze bzw. deren Teile einerseits absolut im Raum und andererseits relativ zu angrenzenden Strukturen bzw. relativ zueinander. Ein Radsatz besteht dabei typischerweise aus zwei durch eine Achse verbundenen Rädern, wie Fig.1 zeigt.

Gemäß Fig.1 sind an einem Radsatz 1 eines - nicht weiter dargestellten - Schienenfahrzeuges ein oder mehrere Sensoren 2 angebracht, welche vorzugsweise als Beschleunigungssensoren Beschleunigungen des Radsatzes 1 oder eines Teils hiervon beispielsweise in Vertikalrichtung erfassen und entsprechende Messsignale erzeugen.

Durch die Erfassung der Messwerte der Sensoren 2 und Weiterleitung an eine Signalerfassungseinheit 3 wird dort ein zeitlicher Beschleunigungsverlauf der Vertikalbeschleunigung des Radsatzes gebildet. Die Signalerfassungseinheit 3 identifiziert weiterhin sog. "signifikante Ereignisse" innerhalb des zeitlichen Beschleunigungsverlaufs sowie die zugeordneten Ereignis-Zeitpunkte $t_0$.

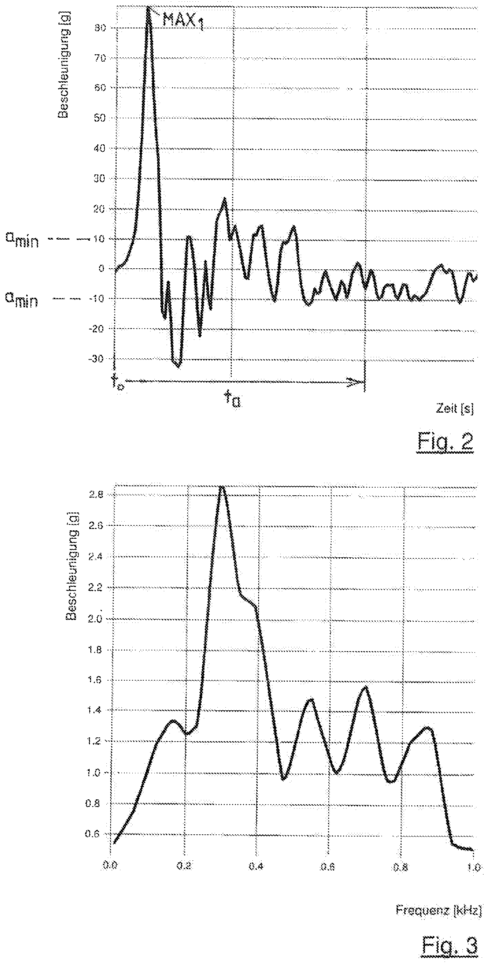

Unter einem "signifikanten Ereignis" innerhalb des Zeitverlaufs des Messsignals ist ein Ereignis zu verstehen, bei welchem die Messgröße oder das Messsignal einen vorgegebenen Mindestwert überschreitet. Im vorliegenden Fall werden die Messsignale beispielsweise dahingehend überwacht, ob die gemessene Vertikalbeschleunigung einen Beschleunigungsmindestwert $a_{min}$ oder eine Beschleunigungsmindestamplitude $a_{min}$ überschreitet. Beispielsweise beträgt der vorgegebene Beschleunigungsmindestwert $a_{min}$ für die vertikale Beschleunigung wenigstens +10g bzw. - 10g (m/s$^2$). Im vorliegenden Fall sind signifikante Einzelereignisse Beschleunigungsmaxima $MAX_1$, welche je nachdem ob der Radsatz in Vertikalrichtung gerade beschleunigt oder verzögert wird positiv oder negativ sein können und eine Mindestamplitude $a_{min}$ im Betrag überschreiten, wie Fig.2 zeigt.

Dies ist beispielsweise dann der Fall, wenn der überwachte Radsatz eine Fuge oder eine Unebenheit des Schienenfahrwegs überfährt und dadurch insbesondere zu einen bestimmten Umfang überschreitenden Vertikalschwingungen angeregt wird, wie sie in Fig.2 dargestellt sind. Bei ausreichender Größe des vorgegebenen Mindestwerts $a_{min}$ kann davon ausgegangen werden, dass der Radsatz 1 zu einer eindeutig detektierbaren harmonischen Eigenschwingung mit charakteristischer Eigenfrequenz $\omega$e angeregt wird. Aufgrund der Materialdämpfung und die durch die Verbindung zu angrenzenden Strukturen bedingte Dämpfung klingen die Schwingungsamplituden der angeregten Eigenschwingung mit der Zeit ab, wie der Verlauf des Beschleunigungszeitsignals von Fig.2 zeigt bzw. die Eigenschwingung wird durch ein weiteres signifikantes Ereignis neu angeregt.

Alternativ kann jede andere Größe oder auch eine Kombination mehrerer anderer Größen als Zeitsignal erfasst werden, welche geeignet ist, eine Schwingung des Radsatzes in Eigenschwingungsform als Antwort auf eine Fremdanregung zu charakterisieren. Als Messgrößen kommen dabei außer der Vertikalbeschleunigung beispielsweise auch Beschleunigungen in beliebiger Richtung, der Bewegungsweg und/oder die Geschwindigkeit des Radsatzes oder von Teilen hiervon in Frage. Nicht zuletzt ist auch denkbar, dass Schwingungen des Radsatzes dynamische Kräfte oder Drücke erzeugen, die dann durch einen Kraft- bzw. Druckaufhehmer messbar und als zeitliches Kraft- bzw. Drucksignal darstellbar sind. Entscheidend für die Wahl der Messgröße oder auch eine Kombination mehrerer Meßgrößen ist deren Eignung, Eigenschwingungen des überwachten Radsatzes bestmöglich darstellen zu können.

Anschließend bildet eine Frequenzanalyseeinheit 4 den Frequenzgang aus dem Zeitverlauf des Beschleunigungssignals von dem Ereignis-Zeitpunkt an über eine definierte Zeitdauer ta. Bevorzugt stellt die definierte Zeitdauer ta ein stets festes Zeitintervall ab dem Ereignis-Zeitpunkt $t_0$ dar, beispielsweise zwischen 5 und 500 Millisekunden ab dem Ereignis-Zeitpunkt $t_0$, wie beispielsweise aus Fig.2 hervorgeht.

Alternativ beginnt die definierte Zeitdauer ta, für welche der Frequenzgang des Zeitverlaufs des Messsignals gebildet wird ab dem Ereignis-Zeitpunkt $t_0$ und endet, wenn eine bestimmte charakterisierende Eigenschaft der Schwingung wie ein bestimmtes Maß des Abklingens der Schwingung eintritt oder ein weiteres oder ein nächstes signifikantes Ereignis auftritt.

Der Frequenzgang wird beispielsweise dadurch gebildet, dass das Zeitsignal einer Fourier-Transformation unterzogen wird. Aus dem Frequenzgang können dann die Kennwerte der durch das signifikante Ereignis angeregten Eigenschwingung, d.h. die geometrische Eigenschwingungsform (bei Vorhandensein einer Mehrzahl von Sensoren, welche über den Radsatz verteilt angeordnet sind), die zu dieser Eigenschwingungsform gehörenden modalen Parameter Eigenfrequenz ωe, Amplitude der Eigenfrequenz ωe, Lersche Dämpfung De sowie Steifigkeit Se bzw. Nachgiebigkeit Ne in bekannter Weise bestimmt werden. Es müssen dabei nicht sämtliche Kennwerte der Eigenschwingung bestimmt werden, einzelne können ausreichend sein.

Weiterhin ist eine Vergleichseinheit 5 zum Vergleichen des aus dem Zeitsignal gebildeten Frequenzgangs mit wenigstens einem in einer Speichereinheit 7 gespeicherten Referenz-Frequenzgang vorgesehen. Dabei kann der Referenz-Frequenzgang ein erwarteter Frequenzgang sein, welcher rechnerisch per Modellrechnung oder auf der Basis eines exemplarischen Muster-Radsatzes z.B. anhand einer experimentellen Modalanalyse erzeugt wird. Alternativ kann der Referenz-Frequenzgang auch ein während des Betriebs des Schienenfahrzeugs aus Zeitverläufen der Messgröße zuvor gebildeter Frequenzgang des überwachten Radsatzes sein oder er stellt eine Mittelung mehrerer Frequenzgänge des überwachten Radsatzes oder mehrerer anderer Radsätze dar. Nicht zuletzt kann der aus dem Zeitverlauf gemäß Fig.2 gebildete Frequenzgang auch mit mehreren, während eines vorangehenden Betriebs des Schienenfahrzeugs gebildeten Referenz-Frequenzgängen des überwachten Radsatzes für eine statistische Auswertung über der Zeit verglichen werden.

In Fig.3 ist ein solcher Referenz-Frequenzgang dargestellt, welcher bei einer Frequenz von ca. 0,27 kHz ein Maximum aufweist, welches eine der Eigenfrequenzen ωe des Radsatzes darstellt. Der Vergleich des aus den im Betrieb gewonnenen Messwerten gebildeten Frequenzgangs mit dem Referenz-Frequenzgang erfolgt bevorzugt anhand wenigstens eines modalen Parameters wie Eigenfrequenz ωe, Amplitude der Eigenfrequenz ωe, Lehrsche Dämpfung De oder Nachgiebigkeit Ne bzw. Steifigkeit Se.

Bei einer stoßförmigen Kraftanregung des Radsatzes, welcher idealisiert einen Einmassenschwinger mit der Masse m darstellt, der über eine Feder mit der Federsteifigkeit c und einem Dämpfer mit der Dämpfung D an den Wagenkasten angebunden ist, stellt sich nach dem Einschwingvorgang eine stationäre, sinusförmige Schwingung mit der Eigenfrequenz

$$\omega_e = \sqrt{\frac{c}{m}} \qquad (1)$$

und der Lehrschen Dämpfung

$$D_e = \frac{d}{2\sqrt{c \cdot m}} \qquad (2)$$

sowie der dynamischen Nachgiebigkeit (mit Real- und Imaginärteil)

$$N(\omega) = \frac{1/c}{1 + j \cdot 2 \cdot D \cdot \omega / \omega e - (\omega / \omega e)^2} \qquad (3)$$

ein. Weicht einer dieser modalen Parameter oder mehrere modalen Parameter signifikant, d.h. um einen Mindestwert von dem entsprechenden Wert des Referenz-Frequenzgangs ab, so ist dies ein Hinweis auf einen Defekt des überwachten Radsatzes, insbesondere auf eine Rissbildung in der Welle oder in einem Rad.

Wenn beispielsweise die Welle eines Radsatzes einen Riss aufweist, so nimmt die dynamische Nachgiebigkeit N (ω) zu, was sich in einem "weicheren" System mit einer gegenüber einer unbeschädigten Welle kleineren Eigenfrequenz ωe sowie in einer größeren Lehrschen Dämpfung De niederschlägt. Weiterhin wird der Frequenzpeak bei der Eigenfrequenz ωe, d.h. die maximale Amplitude der Eigenfrequenz ωe im Frequenzgang größer.

Die Abweichung von Kenngrößen des aus dem Zeitsignal gebildeten Frequenzgangs in Bezug zu dem gespeicherten Referenz-Frequenzgang wird durch eine Auswerteeinheit 6 bewertet. Dabei kann auch der Einfluss des aktuellen Verschleißzustands des Radsatzes und die aktuelle Drehzahl des Radsatzes berücksichtigt werden.

Die Signalerfassungseinheit 3, die Frequenzanalyseeinheit 4, die Vergleichseinheit 5, die Auswerteeinheit 6 sowie die Speichereinheit 7 für den Referenz-Frequenzgang können beispielsweise als kombinierte Signalerfassungs- und Auswerteeinrichtung 8 in einem einzigen Mikro-Computer realisiert sein.

Um einen Mittelwert von aus zeitlich vorangehend aufgenommenen Zeitsignalen gebildeten Frequenzgängen zu bilden, kann die Signalerfassungs- und Auswerteeinrichtung 8 weiterhin eine hier nicht explizit gezeigte Mittelungseinheit beinhalten, welche mehrere Frequenzgänge des überwachten Radsatzes oder mehrerer anderer Radsätze mittelt und daraus einen Referenz-Frequenzgang bildet.

Bezugszeichenliste

1    Radsatz
2    Sensor
3    Signalerfassungseinheit
4    Frequenzanalyseeinheit
5    Vergleichseinheit
6    Auswerteeinheit
7    Speichereinheit
8    Signalerfassungs- und Auswerteeinrichtung 8

$MAX_1$    Beschleunigungsmaximum
$t_a$    Zeitdauer
$a_{min}$    Mindestamplitude

**Patentansprüche**

1. Verfahren zum Überwachen des Fahrverhaltens eines Schienenfahrzeugs, bei dem wenigstens eine, das Schwingungsverhalten wenigstens eines Radsatzes des Schienenfahrzeugs charakterisierende Messgröße wie die Bewegung, die Geschwindigkeit oder die Beschleunigung des Radsatzes oder die auf den Radsatz wirkende Kraft durch mindestens einen, ein entsprechendes Messsignal liefernden Sensor (2) erfasst wird, beinhaltend folgende Schritte:

   - Identifizieren wenigstens eines signifikanten Ereignisses innerhalb des Zeitverlaufs des Messsignals, bei welchem die Messgröße einen vorgegebenen Mindestwert überschreitet sowie Identifizieren des Ereignis-Zeitpunkts, an welchem dieses signifikante Ereignis stattgefunden hat,
   - Bilden des Frequenzgangs aus dem Zeitverlauf des Messsignals von dem Ereignis-Zeitpunkt an, wobei der Frequenzgang für eine definierte Zeitdauer ($t_a$) ab dem Ereignis-Zeitpunkt gebildet wird,
   - Vergleichen des gebildeten Frequenzgangs mit wenigstens einem gespeicherten Referenz-Frequenzgang,
   - Bewertung des Schwingungsverhaltens des Radsatzes abhängig von der Abweichung des gebildeten Frequenzgangs von dem wenigstens einen gespeicherten Referenz-Frequenzgang, **dadurch gekennzeichnet, dass**
   - als die das Schwingungsverhalten des Radsatzes des Schienenfahrzeugs charakterisierende Messgröße die Beschleunigung des Radsatzes (1) in vertikaler Richtung herangezogen wird, wobei ein signifikantes Ereignis innerhalb des Zeitverlaufs der Beschleunigung dadurch identifiziert wird, dass die gemessene Beschleunigung des Radsatzes (1) einen definierten Mindestwert ($a_{min}$) überschritten hat, wobei
   - der Betrag des definierten Mindestwerts ($a_{min}$) für die vertikale Beschleunigung wenigstens 10 g beträgt.

2. Verfahren nach einem der vorhergehenden Ansprüche, **dadurch gekennzeichnet, dass** der Frequenzgang aus dem Zeitverlauf des Messsignals durch eine Fast-Fourier-Transformation (FFT) erzeugt wird.

3. Verfahren nach einem der vorhergehenden Ansprüche, **dadurch gekennzeichnet, dass** die definierte Zeitdauer($t_a$), für welche der Frequenzgang des Zeitverlaufs des Messsignals gebildet wird, ein stets festes Zeitintervall darstellt.

4. Verfahren nach einem der Ansprüche 1 oder 2, **dadurch gekennzeichnet, dass** die definierte Zeitdauer ($t_a$), für welche der Frequenzgang des Zeitverlaufs des Messsignals gebildet wird ab dem Ereignis-Zeitpunkt beginnt und endet, wenn eine bestimmte charakterisierende Eigenschaft der Schwingung wie ein bestimmtes Maß des Abklingens der Schwingung eintritt oder ein weiteres oder nächstes signifikantes Ereignisses auftritt.

5. Verfahren nach einem der vorhergehenden Ansprüche, **dadurch gekennzeichnet, dass** der Referenz-Frequenzgang ein erwarteter Frequenzgang ist, welcher rechnerisch per Modellrechnung oder auf der Basis eines exemplarischen Muster-Radsatzes erzeugt wird.

6. Verfahren nach einem der Ansprüche 1 bis 4, **dadurch gekennzeichnet, dass** der Referenz-Frequenzgang wenigstens ein während des Betriebs des Schienenfahrzeugs aus Zeitverläufen der Messgröße gebildeter Frequenzgang des überwachten Radsatzes (1) ist oder eine Mittelung mehrerer Frequenzgänge des überwachten Radsatzes (1) oder mehrerer anderer Radsätze darstellt.

7. Verfahren nach Anspruch 6, **dadurch gekennzeichnet, dass** der Frequenzgang mit mehreren, während des Betriebs des Schienenfahrzeugs aus Zeitverläufen der Messgröße gebildeten Referenz-Frequenzgängen des überwachten Radsatzes (1) für eine statistische Auswertung über der Zeit verglichen wird.

8. Verfahren nach einem der vorhergehenden Ansprüche, **dadurch gekennzeichnet, dass** der Vergleich des gebildeten Frequenzgangs mit dem wenigstens einen Referenz-Frequenzgang anhand wenigstens eines modalen Parameters wie Eigenfrequenz, Lehrsche Dämpfung oder Nachgiebigkeit erfolgt.

9. Verfahren nach einem der vorhergehenden Ansprüche, **dadurch gekennzeichnet, dass** bei dem Vergleich des Frequenzgangs mit dem wenigstens einen Referenz-Frequenzgang der Einfluss des aktuellen Verschleißzustands des Radsatzes und die aktuelle Drehzahl des Radsatzes (1) berücksichtigt wird.

10. Vorrichtung zum Überwachen des Fahrverhaltens eines Schienenfahrzeugs, bei dem wenigstens eine, das Schwingungsverhalten wenigstens eines Radsatzes (1) des Schienenfahrzeugs charakterisierende Messgröße wie die Bewegung, die Geschwindigkeit oder die Beschleunigung des Radsatzes oder die auf den Radsatz wirkende Kraft durch mindestens einen, ein entsprechendes Messsignal liefernden Sensor (2) erfasst wird, beinhaltend eine Signalerfassungs- und Auswerteeinrichtung (8), welche derart ausgebildet ist, dass sie wenigstens folgende Schritte ausführt:

--Identifizieren wenigstens eines signifikanten Ereignisses innerhalb des Zeitverlaufs des Messsignals, bei welchem die Messgröße einen vorgegebenen Mindestwert überschreitet sowie Identifizieren des Ereignis-Zeitpunkts, an welchem dieses signifikante Ereignis stattgefunden hat,
- Bilden des Frequenzgangs aus dem Zeitverlauf des Messsignals von dem Ereignis-Zeitpunkt an, wobei der Frequenzgang für eine definierte Zeitdauer ($t_a$) ab dem Ereignis-Zeitpunkt gebildet wird,
- Vergleichen des gebildeten Frequenzgangs mit wenigstens einem gespeicherten Referenz-Frequenzgang,
- Bewertung des Schwingungsverhaltens des Radsatzes abhängig von der Abweichung des gebildeten Frequenzgangs von dem wenigstens einen gespeicherten Referenz-Frequenzgang, **dadurch gekennzeichnet, dass**
- wenigstens ein Sensor (2) zur Erfassung der Beschleunigung des Radsatzes (1) in vertikaler Richtung vorgesehen ist, und dass
- die Signalerfassungs- und Auswerteeinrichtung (8) weiterhin ausgebildet ist, dass

- als die das Schwingungsverhalten des Radsatzes des Schienenfahrzeugs charakterisierende Messgröße die Beschleunigung des Radsatzes (1) in vertikaler Richtung herangezogen wird, wobei ein signifikantes Ereignis innerhalb des Zeitverlaufs der Beschleunigung dadurch identifiziert wird, dass die gemessene Beschleunigung des Radsatzes (1) einen definierten Mindestwert ($a_{min}$) überschritten hat, wobei
- der Betrag des definierten Mindestwerts ($a_{min}$) für die vertikale Beschleunigung wenigstens 10 g beträgt.

11. Vorrichtung nach Anspruch 10, **dadurch gekennzeichnet, dass** die Signalerfassungs- und Auswerteeinrichtung (8) wenigstens folgendes umfasst:

- Eine Signalerfassungseinheit (3), welche signifikante Ereignisse innerhalb des Zeitverlaufs des Messsignals sowie die zugeordneten Ereignis-Zeitpunkts identifiziert,
- eine Frequenzanalyseeinheit (4), welche den Frequenzgang aus dem Zeitverlauf des Messsignals von dem Ereignis-Zeitpunkt an über die definierte Zeitdauer ($t_a$) bildet,
- eine Vergleichseinheit (5) zum Vergleichen des gebildeten Frequenzgangs mit dem wenigstens einen gespeicherten Referenz-Frequenzgang,
- eine Auswerteeinheit (6) zur Bewertung des Schwingungsverhaltens des Radsatzes abhängig von der Abweichung des gebildeten Frequenzgangs von dem wenigstens einen gespeicherten Referenz-Frequenzgang.

12. Vorrichtung nach Anspruch 11, **dadurch gekennzeichnet, dass** die Signalerfassungs- und Auswerteeinrichtung (8) weiterhin eine Mittelungseinheit beinhaltet, welche mehrere Frequenzgänge des überwachten Radsatzes oder mehrerer anderer Radsätze mittelt und daraus den Referenz-Frequenzgang bildet.

**Claims**

1. Method for monitoring the driving behavior of a rail vehicle, in which at least one measurement variable characterizing the vibration behavior of at least one wheel set of the rail vehicle, such as the fluctuation, the speed or the acceleration of the wheel set or the force acting on the wheel set, is captured by at least one sensor (2) supplying a corresponding measurement signal, comprising the following steps:

   - identification of at least one significant event within the time profile of the measurement signal, in which the measurement variable exceeds a predefined minimum value, as well as identification of the event time at which this significant event took place,
   - formation of the frequency response from the time profile of the measurement signal from the event time onward, wherein the frequency response is formed for a defined time period ($t_a$) starting from the event time,
   - comparison of the formed frequency response with at least one stored reference frequency response,
   - evaluation of the oscillation behavior of the wheel set as a function of the deviation of the formed frequency response from the at least one stored reference frequency response, **characterized in that**
   - the acceleration of the wheel set (1) in the vertical direction is used as the measurement variable characterizing the oscillation behavior of the wheel set of the rail vehicle, wherein a significant event within the time profile of the acceleration is identified by virtue of the fact that the measured acceleration of the wheel set (1) has exceeded a defined minimum value (amin), wherein
   - the absolute value of the defined minimum value ($a_{min}$) for the vertical acceleration is at least 10 g.

2. Method according to one of the preceding claims, **characterized in that** the frequency response is generated from the time profile of the measurement signal by a Fast Fourier Transformation (FFT).

3. Method according to one of the preceding claims, **characterized in that** the defined time period ($t_a$) for which the frequency response of the time profile of the measurement signal is formed constitutes a continuously fixed time interval.

4. Method according to one of Claims 1 or 2, **characterized in that** the defined time period ($t_a$) for which the frequency response of the time profile of the measurement signal is formed starts from the event time and ends when a specific characterizing property of the oscillation, such as a specific measure of the decay of the oscillation, occurs or a further or subsequent significant event occurs.

5. Method according to one of the preceding claims, **characterized in that** the reference frequency response is an expected frequency response which is generated computationally by model calculation or on the basis of an exemplary specimen wheel set.

6. Method according to one of Claims 1 to 4, **characterized in that** the reference frequency response constitutes at least one frequency response of the monitored wheel set (1) which is formed from time profiles of the measurement variable during the operation of the rail vehicle or averaging over a plurality of frequency responses of the monitored wheel set (1) or of a plurality of other wheel sets.

7. Method according to Claim 6, **characterized in that** the frequency response is compared with a plurality of reference frequency responses of the monitored wheel set (1) for statistical evaluation over time, said reference frequency response being formed from time profiles of the measurement variable during the operation of the rail vehicle.

8.  Method according to one of the preceding claims, **characterized in that** the comparison of the formed frequency response with the at least one reference frequency response takes place on the basis of at least one modal parameter such as natural frequency, Lehr's damping or resilience.

9.  Method according to one of the preceding claims, **characterized in that** when the frequency response is compared with the at least one reference frequency response the influence of the current state of wear of the wheel set and the current rotational speed of the wheel set (1) are taken into account.

10. Device for monitoring the driving behavior of a rail vehicle, in which at least one measurement variable characterizing the oscillation behavior of at least one wheel set (1) of the rail vehicle, such as the fluctuation, the speed or the acceleration of the wheel set or the force acting on the wheel set, is sensed by at least one sensor (2) supplying a corresponding measurement signal, comprising a signal capturing and evaluation device (8) which is embodied in such a way that it carries out at least the following steps:

    - identification of at least one significant event within the time profile of the measurement signal, in which the measurement variable exceeds a predefined minimum value and identification of the event time at which this significant event took place,
    - formation of the frequency response from the time profile of the measurement signal from the event time onward, wherein the frequency response is formed for a defined time period ($t_a$) starting from the event time,
    - comparison of the formed frequency response with at least one stored reference frequency response,
    - evaluation of the oscillation behavior of the wheel set as a function of the deviation of the formed frequency response from the at least one stored reference frequency response, **characterized in that**
    - at least one sensor (2) is provided for sensing the acceleration of the wheel set (1) in the vertical direction, and **in that**
    - the signal capturing and evaluation device (8) is further configured, such that
    - the acceleration of the wheel set (1) in the vertical direction is used as the measurement variable characterizing the oscillation behavior of the wheel set of the rail vehicle, wherein a significant event within the time profile of the acceleration is identified by virtue of the fact that the measured acceleration of the wheel set (1) has exceeded a defined minimum value (amin), wherein
    - the absolute value of the defined minimum value ($a_{min}$) for the vertical acceleration is at least 10 g.

11. Device according to Claim 10, **characterized in that** the signal capturing and evaluation device comprises at least the following:

    - a signal capturing unit (3) which identifies significant events within the time profile of the measurement signal and the associated event times,
    - a frequency analysis unit (4) which forms the frequency response from the time profile of the measurement signal from the event time onward over the defined time period ($t_a$),
    - a comparison unit (51 for comparing the formed frequency response with the at least one stored reference frequency response,
    - an evaluation unit (6) for evaluating the oscillation behavior of the wheel set as a function of the deviation of the formed frequency response from the at least one stored reference frequency response.

12. Device according to Claim 11, **characterized in that** the signal capturing and evaluation device (8) also contains an averaging unit which averages a plurality of frequency responses of the monitored wheel set or of a plurality of other wheel sets and forms the reference frequency response therefrom.


**Revendications**

1.  Procédé de contrôle du comportement en déplacement d'un véhicule ferroviaire, dans lequel on détecte une grandeur de mesure caractérisant le comportement en oscillation d'au moins un essieu du véhicule ferroviaire, comme le déplacement, la vitesse ou l'accélération de l'essieu ou la force agissant sur l'essieu, par au moins un capteur (2) fournissant un signal de mesure correspondant, comportant les stades suivants :

    - on identifie au moins un événement significatif dans la variation du signal de mesure en fonction du temps, pour lequel la grandeur de mesure a dépassé une valeur minimum donnée à l'avance et on identifie l'instant de l'événement où cet événement significatif s'est produit,

- on forme, à partir de la variation du signal de mesure en fonction du temps, la réponse harmonique en fréquence à partir de l'instant de l'événement, la réponse harmonique en fréquence étant formée pour une durée ($t_a$) définie à partir de l'instant de l'événement,

- on compare la réponse harmonique en fréquence formée à au moins une réponse harmonique en fréquence de référence mise en mémoire,

- on évalue le comportement en oscillation de l'essieu en fonction de l'écart entre la réponse harmonique en fréquence formée et la au moins une réponse harmonique en fréquence de référence mise en mémoire, **caractérisé en ce que**

- comme grandeur de mesure caractérisant le comportement en oscillation de l'essieu du véhicule ferroviaire, on utilise l'accélération de l'essieu (1) dans la direction verticale, un événement significatif dans la variation d'accélération en fonction du temps étant identifié par le fait que l'accélération mesurée de l'essieu (1) a dépassé une valeur ($a_{min}$) minimum définie, dans lequel

- la valeur absolue de la valeur ($a_{min}$) minimum définie de l'accélération verticale est d'au moins 10 g.

2.  Procédé suivant l'une des revendications précédentes, **caractérisé en ce que** l'on produit la réponse harmonique à fréquence à partir de la variation du signal de mesure en fonction du temps par une transformation de Fourier rapide (FFT) .

3.  Procédé suivant l'une des revendications précédentes, **caractérisé en ce que** la durée ($t_a$) définie, pendant laquelle on forme la réponse harmonique à fréquence de la variation du signal de mesure en fonction du temps, représente un intervalle de temps toujours fixe.

4.  Procédé suivant l'une des revendications 1 ou 2, **caractérisé en ce que** la durée ($t_a$) définie, pendant laquelle on forme la réponse harmonique à fréquence de la variation du signal de mesure en fonction du temps, commence à partir de l'instant de l'événement et se termine lorsqu'une propriété déterminée caractéristique de l'oscillation, comme une valeur déterminée de l'évanouissement de l'oscillation, se produit ou lorsqu'un autre événement significatif ou un événement significatif suivant se produit.

5.  Procédé suivant l'une des revendications précédentes, **caractérisé en ce que** la réponse harmonique en fréquence de référence est une fréquence harmonique de référence escomptée, qui est produite par un calcul modèle ou sur la base d'un essieu modèle à titre d'exemple.

6.  Procédé suivant l'une des revendications 1 à 4, **caractérisé en ce que** la réponse harmonique en fréquence de référence est une fréquence harmonique de référence de l'essieu (1) contrôlé formée pendant le fonctionnement du véhicule ferroviaire, à partir des courbes dans le temps de la grandeur de mesure ou représente une moyenne de plusieurs réponses harmoniques en fréquence de l'essieu (1) contrôlé ou de plusieurs autres essieux.

7.  Procédé suivant la revendication 6, **caractérisé en ce que** l'on compare, pour une évaluation statistique en fonction du temps, la réponse harmonique en fréquence à plusieurs réponses harmoniques en fréquence de référence de l'essieu (1) contrôlé formées pendant le fonctionnement du véhicule ferroviaire à partir de courbes dans le temps de la grandeur de mesure.

8.  Procédé suivant l'une des revendications précédentes, **caractérisé en ce que** la comparaison de la réponse harmonique en fréquence formée à la au moins une réponse harmonique en fréquence de référence s'effectue à l'aide d'au moins un paramètre modal, comme une fréquence propre, un amortissement de Lehrsche ou une élasticité.

9.  Procédé suivant l'une des revendications précédentes, **caractérisé en ce que**, lorsque l'on compare la réponse harmonique en fréquence à la au moins un réponse harmonique en fréquence de référence, on tient compte de l'influence de l'état instantanée d'usure de l'essieu et de la vitesse de rotation instantanée de l'essieu (1).

10. Système de contrôle du comportement en déplacement d'un véhicule ferroviaire, dans lequel on détecte une grandeur de mesure caractérisant le comportement en oscillation d'au moins un essieu du véhicule ferroviaire, comme le déplacement, la vitesse ou l'accélération de l'essieu ou la force agissant sur l'essieu, par au moins un capteur (2) fournissant un signal de mesure correspondant, comportant un dispositif (8) de détection et d'exploitation d'un signal constitué de manière à exécuter au moins les stades suivants :

- on identifie au moins un événement significatif dans la variation du signal de mesure en fonction du temps, pour lequel la grandeur de mesure a dépassé une valeur minimum donnée à l'avance et on identifie l'instant de l'événement où cet événement significatif s'est produit,

- on forme, à partir de la variation du signal de mesure en fonction du temps, la réponse harmonique en fréquence à partir de l'instant de l'événement, la réponse harmonique en fréquence.étant formée pour une durée ($t_a$) définie à partir de l'instant de l'événement,
- on compare la réponse harmonique en fréquence formée à au moins une réponse harmonique en fréquence de référence mise en mémoire,
- on évalue le comportement en oscillation de l'essieu en fonction de l'écart entre la réponse harmonique en fréquence formée et la au moins une réponse harmonique en fréquence de référence mise en mémoire, **caractérisé en ce que**
- il est prévu au moins un capteur (2) de détection de l'accélération de l'essieu (1) dans la direction verticale et **en ce que**

- le dispositif (8) de détection et d'exploitation du signal est constitué, en outre, de manière

- à utiliser comme grandeur de mesure caractérisant le comportement en oscillation de l'essieu du véhicule ferroviaire, l'accélération de l'essieu (1) dans la direction verticale, un événement significatif dans la variation d'accélération en fonction du temps étant identifié par le fait que l'accélération mesurée de l'essieu (1) a dépassé une valeur ($a_{min}$) minimum définie, dans lequel
- la valeur absolue de la valeur ($a_{min}$) minimum définie de l'accélération verticale est d'au moins 10 g.

11. Système suivant la revendication 10, **caractérisé en ce que** le dispositif (8) de détection et d'exploitation d'un signal comprend au moins ce qui suit :

- une unité (3) de détection d'un signal, qui identifie des événement significatifs dans la courbe du signal de mesure en fonction du temps ainsi que les instants d'événement associés,
- une unité (4) d'analyse des fréquences, qui forme, sur une durée ($t_a$) définie à partir de l'instant de l'événement, la réponse harmonique en fréquence à partir de la courbe du signal de mesure en fonction du temps,
- une unité (5) de comparaison pour comparer la réponse harmonique en fréquence formée à au moins une réponse harmonique en fréquence de référence mise en mémoire,

une unité (6) d'exploitation pour évaluer le comportement en oscillation de l'essieu, en fonction de l'écart entre la réponse harmonique en fréquence formée et la au moins une réponse harmonique en fréquence de référence mise en mémoire.

12. Système suivant la revendication 11, **caractérisé en ce que** le dispositif (8) de détection et d'exploitation d'un signal comporte, en outre, une unité pour faire une moyenne, qui fait la moyenne de plusieurs réponses harmoniques en fréquence de l'essieu contrôlé ou de plusieurs autres essieux et en forme la réponse harmonique en fréquence de référence.

Fig.1

Fig. 2

Fig. 3

**EP 2 478 346 B1**

**IN DER BESCHREIBUNG AUFGEFÜHRTE DOKUMENTE**

**In der Beschreibung aufgeführte Patentdokumente**

- EP 1274979 B1

- US 20090001226 A1